# EUROPEAN PATENT APPLICATION

(11) **EP 1 983 035 A1**
(43) Date of publication of application: **22.10.2008**
(21) Application number: 07713877.4
(22) Date of filing: 06.02.2007
(51) Int. Cl.: C09J 5/00, C09J 7/02, C09J 153/00, C09J 153/02

(54) **METHOD FOR APPLYING HARD ARTICLE AND TRANSFER-TYPE PRESSURE-SENSITIVE ADHESIVE MATERIAL**

(30) Priority: 07.02.2006 JP 2006030346
(71) Applicant: Kokuyo S&T Co.,Ltd., Higashinari-ku Osaka-shi Osaka 537-0013 (JP)
(72) Inventor: KASAHARA, Hiroyuki, Osaka-shi, Osaka 537-0013 (JP); KAWASHITA, Kazushige, Osaka-shi, Osaka 537-0013 (JP); IDE, Akiko, Tokyo 100-8115 (JP); MORISHITA, Yoshihiro, Tsukuba-shi, Ibaraki 305-0841 (JP); KURIHARA, Toyoaki, Tsukuba-shi, Ibaraki 305-0841 (JP)
(74) Representative: TBK-Patent
(86) International application number: PCT/JP2007/052048
(87) International publication number: WO 2007/091567

(57) **Abstract**

A transfer-type adhesive material A is obtained by applying a adhesive 1 composed of a adhesive composition 10 (not shown) containing an acrylic polymer or a styrene-based polymer onto a release substrate in an intermittent pattern. The present invention includes pressing a nut N and a washer W as hard articles against the above-mentioned transfer-type adhesive material A, transferring a plurality of dots 1d of the adhesive 1 onto pressed surfaces Na and Wa of the nut N and the washer W, and applying onto a target surface C1b the plurality of dots 1d of the adhesive 1 transferred onto the pressed surfaces Na and Wa.

## Description

### TECHNICAL FIELD

The present invention relates to a method for attaching a hard article to any target surface.

### BACKGROUND ART

In our daily life or industry, in a case where a hard article such as an article for daily use or a mechanical part needs to be attached to any target surface, an adhesive is generally used. In this case, a method, in which the adhesive is entirely applied onto any one surface of the hard article and then the adhesive-coated surface of the hard article is pressed against any target surface, is often employed.

On the other hand, a double-faced tape or the like is also generally used. In this case, the double-faced tape is adhered to a hard article and then the hard article is attached to any target surface.

Meanwhile, there is proposed a sheet for use in carrying out the positioning of electronic parts and the like using an adhesive. By transferring the adhesive previously coated on a release substrate onto a printed circuit board and further placing electronic parts o the printed circuit board at position where the adhesive has been transferred, it is possible to transfer the adhesive onto a printed circuit board.
Patent Document 1: Japanese Patent Application Laid-open No. H5-154438

### DISCLOSURE OF THE INVENTION

### PROBLEMS TO BE SOLVED BY THE INVENTION

However, even when the adhesive is evenly applied onto a pressed surface of a hard article, there is, in fact, a case where the hard article is fixed to the target surface only by part of the adhesive located at the edge and its vicinity of the pressed surface. In this case, the area of a region where the hard article and the target surface are fixed to each other is not sufficient so that a sufficient fixing strength is not obtained. It can be considered that such a phenomenon results from that a pressing force exerted on the pressed surface which is flat, propagates through the adhesive and is therefore transferred and dispersed in a planar direction. More specifically, it can be considered that since the edge and its vicinity have less space for allowing the pressing force to escape, the pressing force is excessively concentrated only on the edge and its vicinity and is therefore not sufficiently exerted on portions other than the edge and its vicinity, and as a result only a limited region in the pressed surface is fixed to the target surface. Further, needless to say, application of the adhesive onto the pressed surface troubles an operator or a user to apply the adhesive or involves the cost of applying the adhesive.

On the other hand, in the case of using a double-faced tape, there is a case where it is necessary to cut the tape into the shape of the pressed surface. Further, in order to cut the tape into the shape of the pressed surface, it is necessary to prepare various punching dies having different punch hole shapes. Therefore, the double-faced tape is not suitable for small-volume production in terms of the cost of producing punching dies. If the cost of producing punching dies is included in the price of the double-faced tape, the double faced-tape becomes very expensive. Further, since the double-faced tape has a structure in which the adhesive is provided on both surfaces of a substrate, a distance corresponding to the thickness of the double-faced tape is created between the hard article and the target surface. Therefore, in a case where the double-faced tape is used for, for example, part assembly requiring accuracy, there is a fear that the distance will exceed an allowable margin of error for the part assembly.

Further, in the case of using the sheet disclosed in the above patent document, positioning of hard articles can be certainly carried out, but there is a case where the hard articles cannot be securely fixed to a surface depending on the size of the hard articles because the plurality of regions of the adhesive have the same size.

In view of such a problem, it is an object of the present invention to provide a laborsaving method capable of easily attaching a hard article by effectively utilizing the adhesive.

### MEANS FOR SOLVING THE PROBLEMS

In order to achieve the above object, the present invention is directed to a method for attaching a hard article including: pressing a hard article against a transfer-type adhesive material obtained by applying, onto a release substrate, an adhesive including an adhesive composition containing an acrylic polymer or a styrene-based polymer in a plurality of intermittent patterns; transferring the plurality of intermittent patterns of the adhesive onto a pressed surface; and applying, onto a target surface, the plurality of intermittent patterns of the adhesive transferred onto the pressed surface.

In this specification, the hard article refers to one having a surface onto which the adhesive applied in the plurality of intermittent pattern can be entirely transferred simply by pressing it against the transfer-type adhesive material. Further, the pressed surface is not limited to a flat surface as long as it can be brought into surface contact with the target surface, and conceptually includes a curved surface and other surfaces having various shapes. Further, the target surface does not always need to be hard as long as it has a hardness to such a degree that the intermittent pattern of the adhesive transferred onto the hard article can be applied and fixed thereonto, and the target surface conceptually includes, for example, surfaces allowed to be slightly bent or dented.

According to the present invention, it is possible to easily transfer the adhesive onto the surface simply by pressing the hard article against the transfer-type adhesive material, and it is also possible to easily attach the hard article to the target surface simply by applying, onto the target surface, the plurality of intermittent blocks of the adhesive transferred onto the pressed surface. This effectively saves an operator the trouble of having to support a hard article by the hand or fingers and the trouble of having to carry out the positioning of a hard article during, for example, assembly of parts. Particularly, since the hard article is fixed to the target surface at a plurality of points corresponding to the plurality of intermittent patterns of the adhesive, the hard article is stably fixed to the target surface. Further, since only the adhesive is interposed between the pressed surface and the target surface, as compared to a case where a double-faced tape having a substrate for supporting the adhesive is used, a dimensional error in thickness resulting from the adhesive applied onto the target surface is effectively reduced. Further, it is not necessary to prepare punching dies for various hard articles having different shapes, thereby effectively preventing an increase in cost. Therefore, according to the present invention, it is possible to carry out the transfer of the adhesive at low cost irrespective of the shape of the pressed surface. Further, unlike a case where the adhesive is entirely applied onto the pressed surface, a pressing force is exerted on each of the plurality of intermittent patterns of the adhesive when the hard article is attached to the target surface, and therefore the pressed surface is securely fixed to the target surface by all of the plurality of intermittent patterns of the adhesive so that the hard article is securely fixed to the target surface.

Further, in the method for attaching a hard article according to the present invention, the weight-average molecular weight of the acrylic polymer or the styrene-based polymer contained in the adhesive is preferably in the range of 20,000 to 500,000.

More specifically, from the viewpoint of achieving both the cohesive strength and suitability for hot melt application of the adhesive composition, the weight-average molecular weight of the acrylic polymer or the styrene-based polymer contained in the adhesive is preferably in the range of 20, 000 to 500,000, more preferably in the range of 30,000 to 300,000, even more preferably in the range of 40,000 to 200,000.

Further, in the method for attaching a hard article according to the present invention, the polymer may be a block copolymer containing a polymer block having a glass transition temperature of 0°C or less.

More specifically, from the viewpoint of appropriately maintaining the cohesive strength of the adhesive composition, the glass transition temperature (Tg) of the polymer block is preferably 0°C or less.

Further, in the method for attaching a hard article according to the present invention, the polymer may also be an acrylic block copolymer or a hydrogenated or non-hydrogenated styrene-based block copolymer.

More specifically, examples of the styrene-based block copolymer or the acrylic block copolymer include block copolymers represented by the following general formulas: (A-B) a, (A-B) c-A, and (A-B) m-Z, where A and B are polymer blocks selected from alkyl methacrylates such as methyl methacrylate, ethyl methacrylate, n-butyl methacrylate, and 2-ethylhexyl methacrylate: alkyl acrylates such as methyl acrylate, ethyl acrylate, n-butyl acrylate, and 2-ethylhexyl acrylate: aromatic vinyls such as styrene, α-methylstyrene, and p-methylstyrene: and conjugated dienes such as butadiene and isoprene; a, b, and c may be the same or different and are integers from 1 to 10; m is an integer from 3 to 30, and Z is a compound residue capable of linking two or more copolymers (A-B).

As a specific example of the acrylic block copolymer, any one or more of polymethylmethacrylate-b-polyethylacrylate-b-polymethylmeth acrylate, polymethylmethacrylate-b-poly n-butyl acrylate-b-polymethylmethacrylate, and polymethylmethacrylate-b-poly 2-ethylhexyl acrylate-b-polymethylmethacrylate can be mentioned.

On the other hand, as a specific example of the hydrogenated or non-hydrogenated styrene-based block copolymer, any one or more of polystyrene-b-polybutadiene-b-polystyrene, polystyrene-b-polyisoprene-b-polystyrene, polystyrene-b-hydrogenated polybutadiene-b-polystyrene, and polystyrene-b-hydrogenated polyisoprene-b-polystyrene can be mentioned. In this regard, it is to be noted that "b" indicates that the polymer is a block copolymer.

Further, in the method for attaching a hard article according to the present invention, the adhesive may be a hot melt adhesive.

More specifically, from the viewpoint of appropriately applying the adhesive in an intermittent pattern, the adhesive may be a hot melt adhesive.

In this case, the hot melt adhesive preferably has a melt viscosity of 500 to 50, 000 mPa·S at a temperature of 50 to 220°C.

Specifically, when the hot melt adhesive employed, a temperature suitable for applying the hot melt adhesive is generally in the range of 50 to 220°C, preferably in the range of 150 to 180°C. If the temperature of the hot melt adhesive is less than 50°C during application, it is impossible to keep the shape of the hot melt adhesive applied in an intermittent pattern. On the other hand, if the temperature of the hot melt adhesive is higher than 220°C during application, equipment for applying the hot melt adhesive cannot be normally operated due to high temperature and the hot melt adhesive is subjected to reaction such as oxidation by air. Further, a melt viscosity suitable for applying the hot melt adhesive in an intermittent pattern at a temperature within the above range is in the range of 500 to 50,000 mPa·S. If the melt viscosity of the hot melt adhesive is less than 500 mPa·S, the hot melt adhesive flows or cannot keep its shape when applied in an intermittent pattern and therefore it is not possible to precisely form an intermittent pattern of the hot melt adhesive. On the other hand, if the melt viscosity of the hot melt adhesive is larger than 50,000 mPa·S, it is impossible to intermittently apply the hot melt adhesive, and therefore an intermittent pattern of the hot melt adhesive cannot be obtained.

Further, in the method for attaching a hard article according to the present invention, the adhesive may also be one which can be dissolved or dispersed in a dispersion medium to form a solution or an emulsion for use in application. In this case, it is preferred that 60 parts by mass or more of the adhesive is contained per 100 parts by mass of the solution or emulsion for use in application.

More specifically, in a case where such a solution-type or emulsion-type adhesive is used, from the viewpoint of appropriately forming an intermittent pattern of the adhesive, the amount of the adhesive contained per 100 parts by mass of the solution or emulsion for use in application is preferably 60 parts by mass or more, that is, the solvent content of the solution or emulsion is preferably 40 parts by mass or less. This is because if the solvent content of the solution or emulsion exceeds 40%, it is impossible to precisely keep the shape of the adhesive applied in an intermittent pattern after a drying process.

Further, in this case, the viscosity of the solution-type or emulsion-type adhesive is preferably in the range of 200 to 30,000 mPa·S.

More specifically, in a case where the solution-type or emulsion-type adhesive is used, a viscosity suitable for applying such a adhesive in an intermittent pattern is in the range of 200 to 30,000 mPa·S. If the viscosity is less than 500 mPa·S, the solution-type or emulsion-type adhesive flows or cannot keep its shape when applied in an intermittent pattern, and therefore it is not possible to precisely form an intermittent pattern of the adhesive. On the other hand, if the viscosity is larger than 30,000 mPa·S, it is impossible to intermittently apply the solution-type or emulsion-type adhesive, and therefore an intermittent pattern of the solution-type or emulsion-type adhesive cannot be obtained.

Further, in the method for attaching a hard article according to the present invention, the thickness of the adhesive applied onto the release substrate is preferably 5 µm or more and 200 µm or less.

More specifically, from the viewpoint of avoiding causing a dimensional error in the thickness of the hard article or the target surface resulting from the thickness of the adhesive when the hard article is attached to the target surface, the thickness of the adhesive applied onto the release substrate is more preferably 10 µm or more and 20 µm or less.

Further, in the method for attaching a hard article according to the present invention, the length of the major axis of the intermittent pattern is preferably 0.1 mm or more and 3 mm or less.

More specifically, from the viewpoint of exerting a pressing force on each of the plurality of intermittent patterns of the adhesive to appropriately fix the pressed surface, the length of the major axis of the intermittent pattern is more preferably 0.2 mm or more and 2 mm or less.

Further, in the method for attaching a hard article according to the present invention, the ratio of the area of the adhesive applied in an intermittent pattern is preferably 10% or more and 95% or less.

More specifically, from the viewpoint of appropriately fixing the hard article to the target surface, the ratio of the area of the adhesive applied in intermittent patterns is more preferably 18% or more and 75% or less. If the ratio of the area of the adhesive is less than 10%, it is impossible to obtain a sufficient adhesive strength. On the other hand, if the ratio of the area of the adhesive exceeds 95%, the intermittent patterns of the adhesive adjacent to each other are brought into contact with each other when the hard article is pressed, and therefore as described above, dispersion of a pressing force occurs. In addition, the adhesive is pushed out beyond the edge of the surface of the hard article and transferred so that a phenomenon in which the adhesive cannot be easily cut occurs.

### EFFECT OF THE INVENTION

According to the present invention, it is possible to easily and securely attach a hard article to a target surface. This effectively saves an operator the trouble of having to support a hard article with the hand or fingers and the trouble of having to carry out the positioning of a hard article during, for example, part assembly. Particularly, since the hard article is fixed at a plurality of points corresponding to the plurality of intermittent patterns, the hard article is stably fixed to the target surface.

Further, since only the adhesive is interposed between the pressed surface and the target surface, as compared to a case where a double-faced tape having a substrate for supporting a adhesive is used, a dimensional error in thickness resulting from the adhesive applied onto the target surface is effectively reduced.

Further, since the adhesive can be transferred onto the pressed surface irrespective of its shape, it is not necessary to prepare various punching dies, thereby preventing an increase in cost.

Further, unlike a case where the adhesive is entirely applied onto the pressed surface of a hard article to be attached to any target surface, a pressing force is exerted on each of the plurality of intermittent patterns when the hard article is attached to the target surface, and therefore the pressed surface is securely fixed to the target surface by all of the plurality of intermittent patterns.

### BRIEF DESCRIPTION OF THE DRAWINGS

Fig. 1 is an illustration showing the appearance of a transfer-type adhesive material according to one embodiment of the present invention.
Fig. 2 is a schematic view for explaining a method for attaching a hard article according to the embodiment of the present invention.
Fig. 3 is a graph showing the test results of examples of the present invention.

### BEST MODE FOR CARRYING OUT THE INVENTION

Hereinbelow, one embodiment of the present invention will be described with reference to the accompanying drawings.

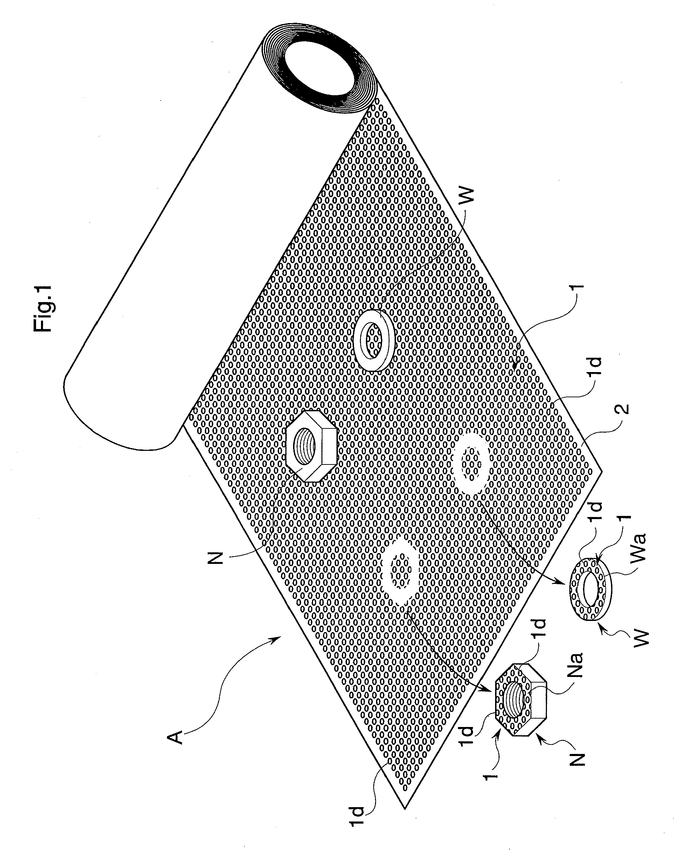

A transfer-type adhesive material A according to this embodiment is shown in Fig. 1. The transfer-type adhesive material A is obtained by applying onto a release substrate 2, a adhesive 1 containing a adhesive composition 10 (not shown) composed of an acrylic polymer or a styrene-based polymer in an intermittent pattern, that is, in a dot pattern.

In this regard, it is to be noted that a method for attaching a hard article according to the present invention includes pressing, for example, a nut N and a washer W (which will be described later) as hard articles against the transfer-type adhesive material A, transferring a plurality of the intermittent patterns of the adhesive 1 onto a pressed surface of each of the hard articles pressed against the transfer-type adhesive material A, and applying onto a target surface, dots 1d of the plurality of the intermittent patterns of the adhesive 1 transferred onto the pressed surface.

Hereinbelow, the structure of the transfer-type adhesive material A and one example of the method for attaching a hard article using the transfer-type adhesive material A will be described in detail.

As described above, the transfer-type adhesive material A is obtained by applying the adhesive 1 onto the release substrate 2 in the intermittent pattern.

In this embodiment, the release substrate 2 is made of paper material whose surface has been subjected to release treatment, but various materials such as resin materials, e.g., polyethylene (PE), polypropylene (PP), and polyethylene terephthalate (PET), can be used for the release substrate 2.

The adhesive 1 is applied onto the release substrate 2 to have a thickness of 5 µm or more and 200 µm or less and to form a pattern composed of a plurality of dots 1d having a length of a major axis of 3 mm or less and a shape of, for example, a circle. In this embodiment, the ratio of the area of the dots 1 to the area of the release substrate 2 is set to, for example, 18 to 75%.

As described above, the adhesive 1 is composed of the adhesive composition 10. In this embodiment, the adhesive composition 10 is a mixture of an acrylic polymer, more specifically, a first acrylic copolymer 11 composed of an acrylic copolymer and a second acrylic copolymer 12 composed of an acrylic copolymer, a first tackifier 13, and a second tackifier 14. In this regard, it is to be noted that the acrylic polymer may be one containing any one or more of polymethyl methacrylate-b-polyethyl acrylate-b-polymethylmethacrylate, polymethylmethacrylate-b-polyn-butyl acrylate-b-polymethyl methacrylate, and polymethylmethacrylate-b-poly 2-ethylhexyl acrylate-b-polymethylmethacrylate. In this embodiment, among these acrylic polymers, LA polymer #2140e manufactured by Kuraray Co., Ltd., is used as the first adhesive composition 11 (not shown) and LA polymer #1114 manufactured by Kuraray Co., Ltd. , is used as the second adhesive composition 12 (not shown). Further, as described above, the adhesive composition 10 contains two kinds of tackifiers. More specifically, ARUFON UP-1000 manufactured by Toagosei Limited, is used as the first tackifier 13 (not shown), and Super Ester A115 manufactured by Arakawa Chemical Industries, Ltd., is used as the second tackifier 14 (not shown). The adhesive 1 is obtained by mixing 100 parts by weight of the first adhesive composition 11, 100 parts by weight of the second adhesive composition 12, 60 parts by weight of the first tackifier 13, and 200 parts by weight of the second tackifier 14.

Instead of the above-described examples, the adhesive composition 10 composed of a styrene-based polymer can also be used. In this regard, it is to be noted that the styrene-based polymer may be a hydrogenated or non-hydrogenated styrene-based block copolymer containing any one or more of polystyrene-b-polybutadiene-b-polystyrene, polystyrene-b-polyisoprene-b-polystyrene, polystyrene-b-hydrogenated polybutadiene-b-polystyrene, and polystyrene-b-hydrogenated polyisoprene-b-polystyrene.

In this embodiment, the adhesive 1 may be, of course, of an emulsion type. More specifically, an emulsion-type adhesive, such as an acrylic ester, which can appropriately form an emulsion even when the solvent content thereof is 40% or less and which can have a viscosity of 200 to 30,000 mPa·S during application can be used as the adhesive 1.

The method for attaching a hard article according to this embodiment includes pressing a nut N and a washer W, which will be described later, as hard articles against the transfer-type adhesive material A described above, transferring a plurality of dots 1d onto the pressed surfaces Na and Wa, which will be described later, of the nut N and the washer W pressed, and applying onto target surfaces C1b and C2b, which will be described later, the plurality of dots 1d transferred onto the pressed surfaces Na and Wa.

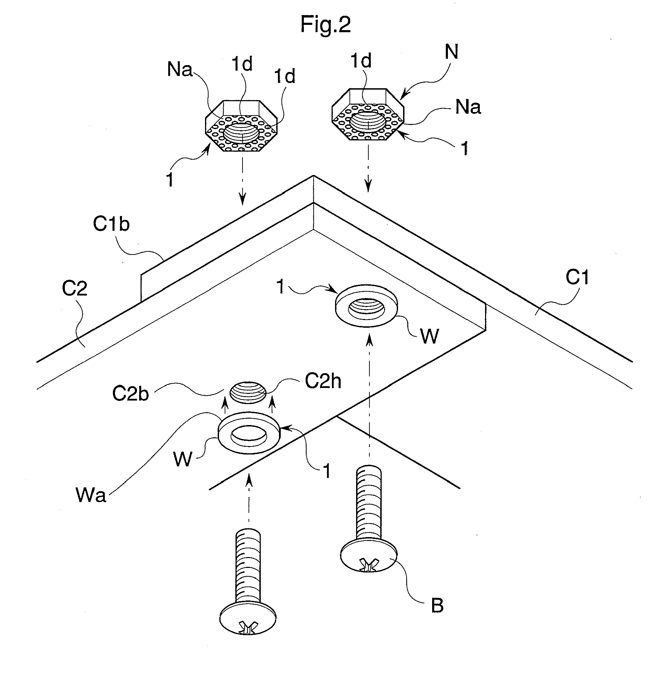

Hereinbelow, one example of the method for attaching a hard article according to this embodiment will be described with reference to Figs. 1 and 2 wherein joining together a first member C1 and a second member C2 using a bolt B and hard articles, i.e., a nut N and a washer W, is applied to part of the assembly operation generally carried out.

First, as shown in Fig. 1, prior to the positioning of a nut N and a washer W relative to a first through hole C1h (not shown) provided at the first member C1 and a second through hole C2h provided at the second member C2, the nut N and the washer W are pressed against the transfer-type adhesive material A to transfer the adhesive 1 onto the nut N and the washer W. In this case, a surface of the nut N and a surface of the washer W which have the adhesive 1 transferred thereonto are defined as the pressed surface Na and the pressed surface Wa, respectively.

Then, as shown in Fig. 2, before the bolt B is allowed to pass through the first through hole C1h (not shown) and the second through hole C2h, the positioning of the nut N and the washer W is carried out relative to the first through hole C1h (not shown) provided at the first member C1 and the second through hole C2h provided at the second member C2, and the nut N and the washer W are attached to the first member C1 and the second member C2. In this case, a surface of the first member C1, to which the pressed surface Na of the nut N is to be attached, is defined as a target surface C1b, and a pressed surface of the second member C2, to which the surface Wa of the washer W is to be attached, is defined as a target surface C2b. Then, the bolt B is allowed to pass through the first and second through holes C1h and C2h and is then engaged with the nut N while the nut N and the washer W are securely kept at their fixed positions. In general, when the bolt B is allowed to pass through the first and second through holes C1h and C2h, an operator usually supports the washer W by at least one hand to keep the washer W at a fixed position on the lower surface of the second member C2. However, by using the method according to this embodiment, it is possible to appropriately engage the bolt B with the nut N without supporting the washer W by the hand of an operator because the washer W is kept at its fixed position on the target surface C1b, C2b of the second member C2 by the adhesive 1.

As describer above, by using the method for attaching a hard article according to this embodiment, it is possible to easily transfer the adhesive 1 onto the pressed surfaces Na and Wa simply by pressing the nut N and the washer W as hard articles against the transfer-type adhesive material A and to easily attach the nut N and the washer W to the target surfaces C1b and C2b simply by applying onto the target surfaces C1b and C2b, the plurality of dots 1d of the intermittent pattern of the adhesive 1 transferred onto the pressed surfaces Na and Wa. This effectively saves an operator the trouble of having to support the nut N and the washer W by the hand or fingers and the trouble of having to carry out the positioning of the nut N and the washer W during, for example, assembly of parts. Particularly, the nut N and the washer W are fixed to the target surfaces C1b and C2b at a plurality of points corresponding to the plurality of dots 1d of the adhesive 1, and therefore the nut N and the washer W can be stably fixed.

Further, the adhesive 1 can be transferred not only onto the pressed surfaces Na and Wa but also onto other pressed surfaces of various hard articles irrespective of their shape simply by pressing them against the transfer-type adhesive material A. Therefore, it is possible to easily and reliably transfer the adhesive onto the nut N, the washer W, and other various hard articles without preparing various punching dies for different hard articles, thereby effectively preventing an increase in cost.

Further, unlike a case where the adhesive 1 is entirely applied onto the pressed surfaces Na and Wa, a pressing force is exerted on each of the plurality of dots 1d of the adhesive 1 when the nut N and the washer W are attached to the target surfaces C1b and C2b, and therefore the pressed surfaces Na and Wa are securely fixed to the target surfaces C1b and C2b by all of the plurality of dots 1d of the adhesive 1 so that the nut N and the washer W are securely attached to the target surfaces C1b and C2b.

Further, as described above, since the thickness of application is 5 µm or more and 200 µm or less, the influence of the thickness of the adhesive 1 on dimensional errors can be kept at low level.

Further, since the length of major axis of dot 1d is 3 mm or less, a pressing force is appropriately exerted on each of the dots 1d when attached to the target surfaces C1b and C2b, and therefore each of the dots 1d can reliably exhibit its fixing strength. Further, in this embodiment, since the ratio of the area of the dots 1d on the release substrate 2 is set to 18% to 75%, it is possible to effectively prevent phenomena such that the nut N and the washer W are not securely fixed due to a too low ratio of the area of the dots 1d, the dots 1d of the intermittent pattern adjacent to each other are brought into contact with each other when the nut N and the washer W are pressed against the transfer-type adhesive material A due to a too high ratio of the area of the dots 1d so that dispersion of pressing force occurs, and the adhesive is pushed out beyond the edge of the pressed surfaces to be pressed when transferred thereonto so that the adhesive is not easily cut.

Although the present invention has been described above with reference to one embodiment, the structure of each of the components is not limited to that of the embodiment described above and various changes can be made without departing from the spirit of the present invention.

For example, in the embodiment described above, part assembly generally carried out using a bolt and a nut is exemplified, but the method for attaching a hard article according to the present invention can be widely applied to assembly operation in our daily life and industry, such as positioning between a first member and a second member and practical assembly of parts, and various other purposes.

The structure of each of the components is not limited to that of the embodiment described above, and various changes can be made without departing from the spirit of the present invention.

### EXAMPLES

The present invention will be described in more detail with reference to the following examples, but is not limited to these examples.

Among the following adhesives, one which could be appropriately applied in an intermittent pattern was used as an example and one which could not be applied in an intermittent pattern was used as a comparative example.

### 1: Test for measurement of viscosities of hot melt adhesives

First, the viscosities of adhesives of Examples and Comparative Example were measured. The Examples and Comparative Example are described as follows.

### Example 1

Among the acrylic adhesives described above with reference to the embodiment of the present invention, one obtained by mixing 100 parts by weight of LA polymer #2140e manufactured by Kuraray Co., Ltd., 100 parts by weight of LA polymer #1114 manufactured by Kuraray Co., Ltd., 60 parts by weight of ARUFON UP-1000 manufactured by Toagosei Limited, and 200 parts by weight of Super Ester A115 manufactured by Arakawa Chemical Industries, Ltd. was used.

### Example 2

Among the acrylic adhesives described above with reference to the embodiment of the present invention, one obtained by mixing 100 parts by weight of LA polymer #2140e manufactured by Kuraray Co., Ltd., 40 parts by weight of LA polymer #1114 manufactured by Kuraray Co., Ltd., and 60 parts by weight of ARUFON UP-1000 manufactured by Toagosei Limited was used.

### Comparative Example 1

An acrylic adhesive obtained by mixing 100 parts by weight of LA polymer #2140e manufactured by Kuraray Co., Ltd. and 100 parts by weight of LA polymer #1114 manufactured by Kuraray Co., Ltd. was used.

### <Test Method>

The viscosity of each of the adhesives was measured at different temperatures in accordance with JIS K6862 by increasing the application temperature of the adhesive from 110 to 210°C by 10°C.

### <Test Results>

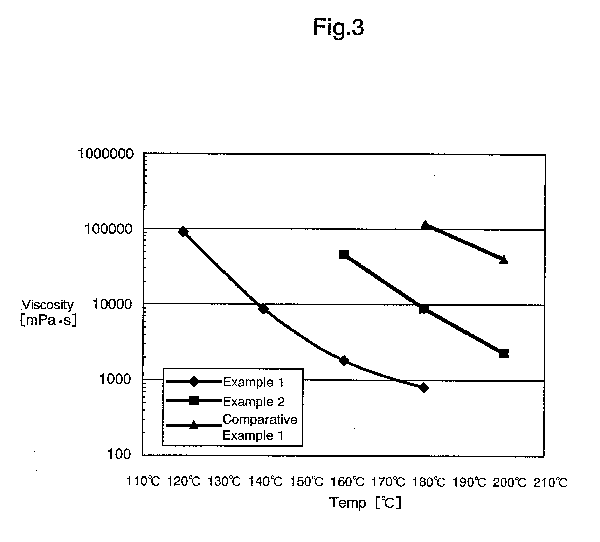

The test results are shown in Table 1 and Fig. 3.

**[Table 1]**

| | | Example 1 | Example 2 | Comparative Example 1 |
|---|---|---|---|---|
| LA2140e | | 100 | 100 | 100 |
| LA1114 | | 100 | 40 | 100 |
| UP1000 | | 60 | 60 | |
| A115 | | 200 | | |
| Melt viscosity [mPa·s] | 120°C | 91000 | | |
| | 140°C | 8700 | | |
| | 160°C | 1800 | 46100 | |
| | 180°C | 830 | 8800 | 120300 |
| | 200°C | | 2300 | 42800 |

Among the viscosities of the hot melt adhesives of the Examples 1 and 2 having suitability for pattern application and the adhesives of the Comparative Examples 1 and 2 at different temperatures, those in the range of 830 mPa·S in the Example 1, 180°C to 20,000 mPa·S in the Example 2, 170°C were suitable for the pattern application. From the result, it can be said that a viscosity suitable for the pattern application is substantially in the range of 500 to 50,000 mPa·S. Further, in view of the circumstances of adhesive application equipment practically used, it can be said that a temperature suitable for the pattern application of the hot melt adhesive is 150°C or more and 180°C or less.

### 2: Test for measurement of viscosities of emulsion-type adhesives

The viscosities of adhesives of Examples below upon application were measured. Examples are described as follows.

### Example 3

SE-4160 manufactured by Showa·Polysol K.K. mainly containing an acrylic ester was used.

### Example 4

SE-6300 manufactured by Showa·Polysol K.K. mainly containing an acrylic ester was used.

### Example 5

SE-1700 manufactured by Showa·Polysol K.K. mainly containing an acrylic ester was used.

### Example 6

HVC-3006 manufactured by TOAGOSEI·ARONTACK K.K. mainly containing an acrylic polymer was used.

### Example 7

HVC-3522K manufactured by TOAGOSEI·ARONTACK K. K. mainly containing an acrylic polymer was used.

### Example 8

HVC-3506S manufactured by TOAGOSEI·ARONTACK K. K. mainly containing an acrylic polymer was used.

### <Test Method>

Each of the adhesives shown below was appropriately mixed with a solvent to obtain an emulsion, and then the viscosity of the emulsion was measured using a B-type viscometer.

### <Test Results>

The test results are shown in Table 2.

**[Table 2]**

| | | Example 3 | Example 4 | Example 5 |
|---|---|---|---|---|
| Viscosity [mPa·s | 23°C | 10,000 | 13,000 | 14,000 |

| | | Example 6 | Example 7 | Example 8 |
|---|---|---|---|---|
| Viscosity [mPa·s] | 25°C | 5,000 | 7,000 | 20,000 |

As can be seen from Table 2, the viscosities of the adhesives of the Examples 3 to 8 having suitability for pattern application were within the range of 5, 000 to 20, 000. Further, from the fact that these adhesives of the Examples 3 to 8 could be appropriately applied, it can be surmised that the range of a viscosity suitable for the pattern application of the emulsion-type adhesive is actually wider than the result obtained in this measurement.

### INDUSTRIAL APPLICABILITY

According to the present invention, it is possible to easily and securely attach a hard article to a target surface. This effectively saves an operator the trouble of having to support a hard article by the hand or fingers and the trouble of having to carry out the positioning of a hard article during, for example, part assembly. Particularly, since the hard article is fixed to the target surface at a plurality of points corresponding to the plurality of intermittent patterns, the hard article can be stably fixed to the target surface.

Further, since only the adhesive is interposed between the pressed surface and the target surface, as compared to a case where a double-faced tape having a substrate for supporting a adhesive is used, a dimensional error in thickness resulting from the adhesive applied onto the target surface can be effectively reduced.

Further, since the adhesive can be transferred onto the pressed surface of the hard article irrespective of its shape simply by pressing it against the transfer-type adhesive material, it is not necessary to prepare various punching dies for different hard articles, thereby preventing an increase in cost.

Further, unlike a case where the adhesive is entirely applied onto the pressed surface, a pressing force is exerted on each of the plurality of intermittent patterns when the hard article is attached to the target surface, and therefore the pressed surface is securely fixed to the target surface by all of the plurality of intermittent patterns.

## Claims

1. A method for attaching a hard article comprising:
pressing a hard article against a transfer-type adhesive material obtained by applying, onto a release substrate, a adhesive including a adhesive composition containing an acrylic polymer or a styrene-based polymer in a plurality of intermittent patterns;
transferring the plurality of intermittent patterns of the adhesive onto a pressed surface; and
applying, onto a target surface, the plurality of intermittent patterns transferred onto the pressed surface of the hard article.

2. The method for attaching a hard article according to claim 1, wherein the weight-average molecular weight of the acrylic polymer or the styrene-based polymer contained in the adhesive is in the range of 20,000 to 500,000.

3. The method for attaching a hard article according to claim 1 or 2, wherein the polymer is a block copolymer containing a polymer block having a glass transition temperature of 0°C or less.

4. The method for attaching a hard article according to claim 1, 2, or 3, wherein the polymer is an acrylic block copolymer or a hydrogenated or non-hydrogenated styrene-based block copolymer.

5. The method for attaching a hard article according to claim 4, wherein the acrylic block copolymer is any one or more of polymethylmethacrylate-b-polyethylacrylate-b-polymethylmeth acrylate), polymethylmethacrylate-b-poly n-butyl acrylate-b-polymethylmethacrylate, and polymethylmethacrylate-b-poly 2-ethylhexyl acrylate-b-polymethylmethacrylate.

6. The method for attaching a hard article according to claim 4 or 5, wherein the hydrogenated or non-hydrogenated styrene-based block copolymer is any one or more of polystyrene-b-polybutadiene-b-polystyrene, polystyrene-b-polyisoprene-b-polystyrene, polystyrene-b-hydrogenated polybutadiene-b-polystyrene, and polystyrene-b-hydrogenated polyisoprene-b-polystyrene.

7. The method for attaching a hard article according to claim 1, 2, 3, 4, 5, or 6, wherein the adhesive is a hot melt adhesive.

8. The method for attaching a hard article according to claim 7, wherein the adhesive has a viscosity of 500 to 50,000 mPa·S at a temperature of 50 to 220°C.

9. The method for attaching a hard article according to claim 1, 2, 3, 4, 5, or 6, wherein the adhesive is one which can be dissolved or dispersed in a dispersion medium to form a solution or an emulsion for use in application, and wherein 60 parts by mass or more of the adhesive is contained per 100 parts by mass of the solution or emulsion for use in application.

10. The method for attaching a hard article according to claim 9, wherein the adhesive has a viscosity of 200 to 30, 000 mPa·S.

11. The method for attaching a hard article according to claim 1, 2, 3, 4, 5, 6, 7, 8, 9, or 10, wherein the thickness of the adhesive applied onto the release substrate is 5 µm or more and 200 µm or less.

12. The method for attaching a hard article according to claim 1, 2, 3, 4, 5, 6, 7, 8, 9, 10, or 11, wherein the length of the intermittent pattern is 0.1 mm or more and 3 mm or less.

13. The method for attaching a hard article according to claim 1, 2, 3, 4, 5, 6, 7, 8, 9, 10, 11, or 12, wherein the ratio of the area of the adhesive applied in an intermittent pattern is 10% or more and 95% or less.

14. A transfer-type adhesive material to be used in the method for attaching a hard article according to claim 1, 2, 3, 4, 5, 6, 7, 8, 9, 10, 11, 12 or 13.
